# EUROPÄISCHE PATENTANMELDUNG

(11) **EP 2 801 795 A1**
(43) Veröffentlichungstag der Anmeldung: **12.11.2014**
(21) Anmeldenummer: 13166894.9
(22) Anmeldetag: 07.05.2013
(51) Int. Cl.: G01D 11/24

(54) **Abtastkopf für einen Geber**

(71) Anmelder: Baumer Hübner GmbH, 10589 Berlin (DE)
(72) Erfinder: Hiller, Bernhard, 13465 Berlin (DE); Loharens, Axel, 13189 Berlin (DE); Weiss, Michael, 13503 Berlin (DE); Pfeffer, Armin, 14513 Teltow (DE)
(74) Vertreter: Strauss, Steffen

(57) **Zusammenfassung**

Die Erfindung betrifft einen Abtastkopf (1) für einen Geber zur Erfassung von Rotations- oder Linearparametern, beispielsweise Position, Geschwindigkeit oder Beschleunigung, eines drehbaren oder linear bewegbaren Bauelements, insbesondere einer Welle (13). Einige drehbare Bauelemente mit großen Durchmessern werden nur als Einzelstücke oder nur in kleinen Serien gefertigt. Bisher werden die Abtastköpfe für jedes drehbare Bauelement einzeln maßgefertigt, was einen großen Aufwand darstellt. Die Aufgabe der Erfindung ist es, den Aufwand zur Herstellung eines Abtastkopfes zu verringern. Die Aufgabe wird dadurch gelöst, dass ein Abtastkopf (1) bereitgestellt wird, der sich an drehbare Bauelemente mit verschieden großen Durchmessern und/oder an linear bewegbare Bauelemente mit geringem Aufwand anpassen lässt. Dazu sind eine erste und eine zweite Sensoreinrichtung (3, 5) in mindestens zwei unterschiedlichen Winkelstellungen der Sensorflächen (4, 6) zueinander am Gehäuse (2) anordenbar.

## Beschreibung

Die Erfindung betrifft einen Abtastkopf für einen Geber zur Erfassung von Rotations- bzw. Linearparametern, beispielsweise Position, Geschwindigkeit oder Beschleunigung, eines drehbaren oder linear bewegbaren Bauelementes, insbesondere einer Welle oder einer linearen Strecke.

Um beispielsweise die Rotationsposition eines drehbaren Bauelementes festzustellen, wird in vielen Fällen eine Maßverkörperung an dem drehbaren Bauelement angebracht, die einer Sensorfläche einer Sensoreinrichtung gegenüberliegt und die von einer Sensorfläche abgetastet wird. Neuere Systeme, wie sie beispielsweise aus der DE 10 2010 061 738.5 bekannt sind, benutzen dabei eine Maßverkörperung, die sich nicht über die kompletten 360° einer Umdrehung erstreckt und zwischen ihren Enden eine Lücke bildet. Um diese Lücke zu überbrücken, ist es notwendig, zwei oder mehr Sensorflächen, deren Abstand voneinander größer als die Lücke ist, zur Positionsermittlung zu benutzen. Eine Lücke innerhalb der Maßverkörperung ist auch bei linearen Messsystemen häufig anzutreffen, da die Maßverkörperungen oft nicht entsprechend lang herstellbar, oder transportierbar sind. Auch bei anderen Messsystemen, beispielsweise bei solchen, die mit Nonius oder zusätzlichen Pseudo-Random-Code-Spuren arbeiten, kann es notwendig sein, dass mindestens zwei in einer Umfangsrichtung des drehbaren Bauelements oder in der Verfahrrichtung eines linear bewegbaren Bauelements versetzt angeordnete Sensorflächen vorhanden sind.

Sehr große drehbare Bauelemente werden üblicherweise nur als Einzelstücke oder nur in kleinen Serien gefertigt. In solchen Fällen werden die Abtastköpfe für jeden Durchmesser des drehbaren Bauelements einzeln maßgefertigt. Dies stellt einen großen Aufwand dar. Die Aufgabe der Erfindung ist es, den Aufwand zur Herstellung eines Abtastkopfes zu verringern.

Die Aufgabe wird dadurch gelöst, dass ein Abtastkopf bereitgestellt wird, der sich an Wellen oder andere drehbare Bauelemente mit verschieden großen Durchmessern und/oder an linear bewegbare Bauelemente mit geringem Aufwand anpassen lässt. Dazu sind eine erste und eine zweite Sensoreinrichtung in mindestens zwei unterschiedlichen Winkelstellungen der Sensorflächen zueinander am Gehäuse anordenbar.

Der erfindungsgemäß ausgestaltete Abtastkopf ermöglicht ohne Austausch von Teilen die Messung an mindestens zwei verschieden großen Durchmessern und/oder die Messung an einer linearen Strecke, indem die Winkelstellung der Sensorflächen je nach Bedarf eingestellt wird. Sind die Sensorflächen stärker zueinander geneigt, schließen sie einen kleineren Winkel zwischen sich ein und sind zur Messung an kleineren Durchmessern geeignet. Zur Messung an größeren Durchmessern ist der Winkel zwischen den beiden Sensorflächen größer. Soll eine lineare Strecke gemessen werden, sollten die Sensorflächen parallel und miteinander fluchtend ausgerichtet sein.

Im Folgenden werden jeweils für sich vorteilhafte Weiterentwicklungen und Ausgestaltungen beschrieben, die beliebig miteinander kombiniert werden können.

Die erste und die zweite Sensorfläche können in den mindestens zwei unterschiedlichen Winkelstellungen der Sensorflächen zueinander am Gehäuse anbringbar sein, insbesondere können sie am Gehäuse befestigbar sein. Vorteilhafterweise sind sie schon am Gehäuse angebracht oder befestigt.

Der Abtastkopf kann eine Halteeinrichtung aufweisen, die die erste und/oder die zweite Sensoreinrichtung in den mindestens zwei unterschiedlichen Winkelstellungen halten kann. Beispielsweise kann ein plastisch verformbares Element mit einer ausreichenden Stabilität, etwa ein Blech, verwendet werden, um eine oder beide Sensoreinrichtung zu halten. Eine solche Halteeinrichtung kann dann nach Bedarf verformt werden ohne eine Fixierung lösen zu müssen.

Der Abtastkopf kann eine Fixiereinrichtung aufweisen, die eine Fixierung von erster und zweiter Sensoreinrichtung in den mindestens zwei Winkelstellungen der Sensorflächen zueinander ermöglicht. Eine Änderung der Winkelstellung kann bei einer Fixiereinrichtung nur erfolgen, wenn die Fixiereinrichtung in einer Löseposition ist. Beispielsweise kann eine Schraube als Fixiereinrichtung dienen. Wenn die Schraube angezogen ist, kann die Sensoreinrichtung dadurch fixiert sein. Wenn die Schraube nicht angezogen ist, kann die Sensoreinrichtung bewegt werden.

Die Sensorflächen können plan sein. Alternativ können sie auch gekrümmt sein. Beispielsweise können sie leicht konvex sein, um nicht nur Messungen an Außenflächen, sondern auch an konkaven Innenflächen zu erlauben.

Die zwei Sensorflächen können in einer Ausgestaltung eine Normalenrichtung aufweisen, die senkrecht zur Rotationsachse des drehbaren Bauelementes beispielsweise der Welle verläuft. In dieser Ausgestaltung liegen die Sensorflächen bevorzugt radial beabstandet von und gegenüber einer Umfangsfläche der Welle bzw. einer Maßverkörperung eines linear bewegbaren Bauelements.

In einer anderen Ausgestaltung erfolgt die Abtastung axial, also mit axial von einer Stirnfläche des drehbaren Bauelementes beispielsweise der Welle beabstandeten bzw. der Stirnfläche gegenüberliegenden Sensorflächen. Bei dieser Ausgestaltung verläuft die Normalenrichtung der Sensorfläche parallel zur Rotationsachse des Bauelements. Die Winkelstellungen der zwei Sensorflächen unterscheiden sich wie bei der ersten Ausgestaltung in der Komponente, die tangential zur Bewegung eines Punktes auf dem drehbaren Bauelement verläuft.

In einer weiteren vorteilhaften Ausgestaltung sind die erste und/oder die zweite Sensorfläche schwenkbar am Gehäuse angeordnet, angebracht oder befestigt. Durch die schwenkbare Ausgestaltung kann die Ausrichtung der Sensorfläche in mehreren Stufen oder kontinuierlich an unterschiedliche Durchmesser des drehbaren Bauelements angepasst werden. Die Ausrichtung der Sensorflächen kann folglich so erfolgen, dass stets die maximale Sensorfläche von der vorbeibewegten Maßverkörperung erfasst wird bzw. der Luftspalt zwischen den jeweiligen Sensorflächen und der Maßverkörperung, die auf dem drehbaren Bauelement bzw. dem linearen Bauelement angebracht ist, optimal ist.

Die Sensorfläche kann Teil einer Sensoreinrichtung sein, die zusätzlich zur Sensorfläche auch weitere Elemente, wie beispielsweise Schaltkreise zur Signalbearbeitung aufweisen kann. Die Sensoreinrichtung kann schwenkbar am Gehäuse angeordnet, angebracht oder befestigt sein.

Die erste und/oder die zweite Sensorfläche können mittelbar oder unmittelbar schwenkbar am Gehäuse angeordnet, angebracht oder befestigt sein. Eine mittelbare Anordnung wäre beispielsweise eine Anordnung über ein zwischen dem Gehäuse und der Sensorfläche liegendes, drittes Element. Dieses dritte Element kann unbeweglich mit einer Sensorfläche und dem Gehäuse beweglich sein.

In einer weiteren vorteilhaften Ausgestaltung ist eine der beiden Sensorflächen, beispielsweise die erste Sensorfläche unbeweglich am Gehäuse befestigt und die andere Sensorfläche, in diesem Beispiel die zweite Sensorfläche, beweglich angeordnet, z.B. schwenkbar am Gehäuse befestigt. Diese Ausgestaltung ist im Vergleich zur Ausgestaltung mit zwei schwenkbaren oder zwei beweglichen Sensorflächen einfacher zu fertigen.

Die Sensorflächen und/oder Sensoreinrichtung können unabhängig voneinander schwenkbar sein, so dass jede Sensorfläche für sich lageoptimiert werden kann.

In einer weiteren Ausgestaltung sind die erste und die zweite Sensorfläche schwenkbar miteinander gekoppelt. Die Anpassung der Sensorflächen an verschiedene Durchmesser ist dabei besonders einfach, da nur die eine oder die andere Sensorfläche eingestellt werden muss und die andere Sensorfläche automatisch richtig mitjustiert wird. Eine solche Ausgestaltung erfordert jedoch einen verhältnismäßig hohen Aufwand.

In einer weiteren Ausgestaltung können die beiden Sensorflächen und/oder Sensoreinrichtungen über ein elastisches Element, beispielsweise eine Blattfeder, miteinander verbunden sein, das in seiner Mitte mit dem Gehäuse verbunden ist. Über entsprechende, an den Außenseiten der Sensoreinrichtungen angebrachte Elemente, die wiederum variabel, z.B. mittels einer Langlochbefestigung, mit dem Gehäuse verbunden werden können, lassen sich dann die Sensorflächen und oder Sensoreinrichtungen an verschiedene Durchmesser anpassen.

Wie eingangs beispielhaft beschrieben, ist bei einigen Messsystemen die Verwendung von zwei Sensoreinrichtungen notwendig, um eine Lücke zwischen zwei Abschnitten der Maßverkörperung zu überbrücken. In diesem Fall sollte der Abstand zwischen den beiden Sensoreinrichtungen größer als die Lücke sein, so dass im Bereich der Lücke stets zumindest eine Sensoreinrichtung noch die Maßverkörperung abtastet. Bei anderen Messsystemen werden beide Sensoreinrichtungen immer gleichzeitig benutzt und die Positionsinformation aus der Kombination der beiden Sensoren gewonnen. Bei solchen Systemen kann es notwendig sein, dass der Abstand der beiden Sensoreinrichtungen entlang der Maßverkörperung einen vorbestimmten Wert aufweist. Dies ist der Fall, wenn mit Hilfe der beiden Sensoreinrichtungen zwei Signale durch die Abtastung der einen Verkörperung erzeugt werden sollen, die um einen bestimmten Phasenwinkel zueinander versetzt sind. Da sich bei verschiedenen Winkelstellungen die Abstände zwischen den Sensoreinrichtungen unterscheiden können, ist es besonders vorteilhaft, wenn sich die Sensoreinrichtungen in unterschiedlichem Abstand voneinander anordnen, anbringen oder befestigen lassen. Dadurch kann der Abstand in den verschiedenen Winkelstellungen richtig eingestellt werden.

Vorteilhafterweise ist nicht nur die Anordnung von erster und zweiter Sensorfläche in zwei unterschiedlichen Winkelstellungen, sondern in einer beliebigen Winkelstellung innerhalb eines kontinuierlichen Bereichs möglich. Dadurch kann der Abtastkopf nicht nur für zwei unterschiedliche Durchmesser, sondern für Durchmesser in einem kontinuierlichen Bereich verwendet werden.

Bei den Sensoreinrichtungen kann es sich um kontaktlos messende Sensoreinrichtungen handeln. Als Messverfahren können beispielsweise induktive, kapazitive, magnetische und/oder optische Verfahren zum Einsatz kommen. Die kontaktlose Messung verursacht weniger Verschleiß als eine Messung mit einem direkten Kontakt. In einer besonders vorteilhaften Ausgestaltung sind die Sensoreinrichtungen magnetisch messende Sensoreinrichtungen.

Neben der ersten und der zweiten Sensoreinrichtung kann noch eine dritte Sensoreinrichtung mit einer dritten Sensorfläche vorgesehen sein, um die Messung zu verbessern. Die dritte Sensorfläche muss dabei nicht bewegbar oder schwenkbar am Gehäuse angeordnet sein, was den Fertigungsaufwand verringert und den Justiervorgang beim Montieren des Abtastkopfes erleichtert. Die dritte Sensorfläche kann sich beispielsweise zwischen der ersten und der zweiten Sensorfläche befinden.

Um nicht nur die Rotation von Wellen, sondern auch eine lineare Bewegung messen zu können, ist es vorteilhaft, wenn die Sensorflächen in eine erste Winkelstellung überführbar sind, in der sie miteinander fluchten. In der ersten Winkelstellung liegen die beiden Sensorflächen in einer Ebene und parallel zueinander, so dass eine gerade beziehungsweise plane Maßverkörperung, wie sie beispielsweise an einem linear bewegbaren Bauelement angebracht sein kann, abgetastet werden kann. Die Sensorflächen können ferner in eine zweite Winkelstellung überführbar sein, in der sie nicht miteinander fluchten, so dass die Messung an beispielsweise einer Welle oder einem anderen Rotationskörper möglich ist.

Die zwei Sensoreinheiten können dieselbe Maßverkörperung abtasten. Dazu können die erste und die zweite Sensorfläche auf der gleichen, entlang einer Axialrichtung gemessenen Höhe liegen. Alternativ können die erste Sensorfläche und die zweite Sensorfläche verschiedene Maßverkörperungen abtasten, beispielsweise eine grob aufgelöste Maßverkörperung und eine fein aufgelöste Maßverkörperung.

Der Abtastkopf kann eine Signalverarbeitungselektronik umfassen, die die Signale der Sensoreinrichtungen aufnimmt und zumindest teilweise weiterverarbeitet. Aufbereitete Informationen können dann mit einer einzigen Datenleitung weitergegeben werden.

Im Folgenden ist die Erfindung anhand von Ausführungsbeispielen mit Bezug auf die Zeichnungen näher erläutert. Die bei den einzelnen Ausführungsbeispielen unterschiedlichen Merkmale können nach Maßgabe der obigen Ausführungen miteinander kombiniert werden. Außerdem können nach Maßgabe der obigen Darstellung auch einzelne Merkmale bei den Ausführungsbeispielen weggelassen werden, sollte es im speziellen Anwendungsfall auf den mit diesem Merkmal verbundenen Vorteil nicht ankommen.

Es zeigen:
- Fig. 1: eine schematische Ansicht eines erfindungsgemäßen Abtastkopfes;
- Fig. 2: eine schematische Ansicht eines erfindungsgemäßen Abtastkopfes zusammen mit einer Welle und einem auf der Welle angebrachten Spannband mit einer Maßverkörperung;
- Fig.3: eine schematische Perspektivansicht eines erfindungsgemäßen Abtastkopfes zusammen mit einem Spannband;
- Fig. 4: einen schematischen Querschnitt eines erfindungsgemäßen Abtastkopfes zusammen mit einer Welle mit einem ersten Durchmesser;
- Fig. 5: einen schematischen Querschnitt eines erfindungsgemäßen Abtastkopfes zusammen mit einer Welle mit einem zweiten Durchmesser;
- Fig. 6: eine schematische Ansicht eines erfindungsgemäßen Abtastkopfes, der zur Messung der Bewegung einer ebenen Fläche ausgestaltet ist;
- Fig. 7: einen schematischen Querschnitt eines erfindungsgemäßen Abtastkopfes zur inneren Abtastung einer Hohlwelle;
- Fig. 8: eine schematische Ansicht eines erfindungsgemäßen Abtastkopfes zur axialen Abtastung der Rotation einer Welle mit einem ersten Durchmesser;
- Fig. 9: eine schematische Ansicht eines erfindungsgemäßen Abtastkopfes zur axialen Abtastung der Rotation einer Welle mit einem zweiten Durchmesser;
- Fig. 10: eine schematische Ansicht eines erfindungsgemäßen Abtastkopfes zur axialen Abtastung der Rotation einer Welle mit mehreren Maßverkörperungen.

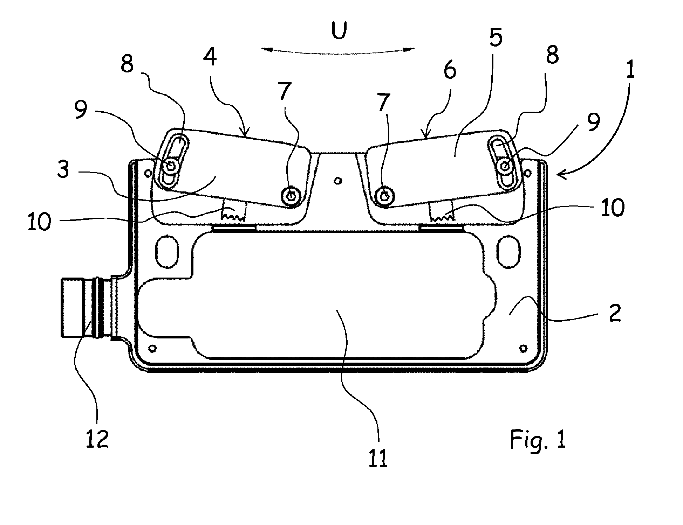

Fig. 1 zeigt eine schematische Ansicht eines erfindungsgemäßen Abtastkopfes 1 mit einem Gehäuse 2 sowie einer ersten, am Gehäuse 2 angeordneten Sensoreinrichtung 3 mit einer ersten Sensorfläche 4 und einer zweiten, am Gehäuse 2 angeordneten, in einer Umfangsrichtung U einer Welle oder eines anderen drehbaren Bauteils (nicht gezeigt) zur ersten Sensoreinrichtung 3 versetzt angeordneten Sensoreinrichtung 5 mit einer zweiten Sensorfläche 6.

Die beiden Sensorflächen 4, 6 liegen zur Bestimmung der Winkelposition einer Maßverkörperung gegenüber und tasten diese ab. Eine Sensorfläche 4, 6 kann eine Vorzugsrichtung definieren, entlang der die Messung besonders effizient ist. Eine solche Vorzugsrichtung kann etwa senkrecht zur Ausdehnung der Sensorfläche 4, 6 sein. Die beiden Sensorflächen 4, 6 sind in Umfangsrichtung zueinander versetzt und so zueinander geneigt, dass die jeweilige Vorzugsrichtung auf die Rotationsachse des drehbaren Bauelement gerichtet ist. Um eine Messung an drehbaren Bauelementen mit verschiedenen Durchmessern und/oder an einem linear bewegbaren Bauelement zu ermöglichen, lassen sich erfindungsgemäß die Sensorflächen 4, 6 in mindestens zwei Winkelstellungen zueinander anordnen.

Die erste und die zweite Sensoreinrichtung 3, 5 sind jeweils über eine Achse 7 schwenkbar am Gehäuse 2 befestigt. Die schlitzförmigen Ausnehmungen 8 an den Sensoreinrichtungen 3, 5 ermöglichen dabei, dass die Sensoreinrichtungen 3, 5 innerhalb eines kontinuierlichen Bereichs schwenkbar sind. Jede der beiden Sensoreinrichtungen 3, 5 verfügt über eine Fixiereinrichtung 9 beispielsweise in Form einer Schraube, die durch die schlitzförmige Ausnehmung 8 ragt und die Sensoreinrichtung 3 beziehungsweise 5 fixiert. Der hier gezeigte Abtastkopf 1 ermöglicht also eine Fixierung von erster und zweiter Sensorfläche 4, 6 unabhängig voneinander in einer beliebigen Winkelstellung zueinander innerhalb eines kontinuierlichen Bereichs. Der so ausgestaltete Abtastkopf 1 kann an verschiedene Wellendurchmesser angepasst werden. Alternativ zur dargestellten Ausgestaltung könnten schlitzförmige Ausnehmungen am Gehäuse 2 vorhanden sein, um eine Verschwenkung zu ermöglichen.

Die beiden Sensoreinrichtungen 3, 5 verfügen neben den Sensorflächen 4, 6 noch jeweils über eine Sensorelektronik (nicht gezeigt) im Inneren der Sensoreinrichtung 3, 5. Die Sensoreinrichtungen 3, 5 sind mit nur schematisch angedeuteten Verbindungselementen 10 mit einer Signalverarbeitungselektronik (nicht gezeigt) in einem Hohlraum 11 des Abtastkopfes 1 verbunden. Diese Signalverarbeitungselektronik kann beispielsweise dazu dienen, die Sensorsignale weiter zu verarbeiten und schon ein fertiges Positionssignal, und/oder Geschwindigkeitssignale und/oder Beschleunigungssignal auszugeben, das über den Ausgang 12 ausgegeben wird.

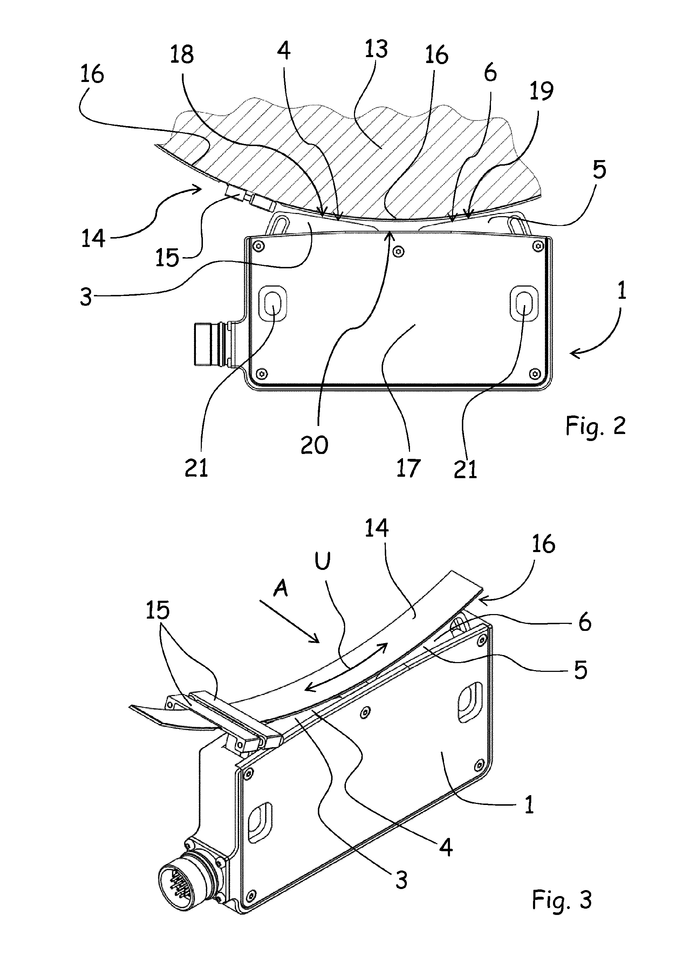

In Fig. 2 ist ein erfindungsgemäßer Abtastkopf 1 zusammen mit einem Spannband 14 gezeigt. Das Spannband 14 wird mittels eines Spannschlosses 15 auf die Welle 13 gespannt, wodurch es fest am Umfang der Welle 13 anliegt. Außerhalb des Bereichs des Spannschlosses 15 verfügt das Spannband 14 über eine Maßverkörperung 16. In diesem Fall handelt es sich um eine magnetische Maßverkörperung 16, die von den magnetisch messenden Sensoreinrichtungen 3, 5 erfasst wird. Um die durch das Spannschloss 15 verursachte, zum Spannen notwendige Lücke zwischen den Bereichen mit der Maßverkörperung zu überbrücken, verfügt der Abtastkopf 1 über zwei Sensoreinrichtungen 3, 5, sodass immer mindestens eine Sensoreinrichtung 3, 5 die Maßverkörperung 16 erfassen und messen kann.

Die beiden in der Fig. 1 gezeigten Halteeinrichtungen 9 der Sensoreinrichtungen 3, 5 sind hier von einer Abdeckung 17 abgedeckt, wodurch ein unbeabsichtigtes Verstellen der Winkelstellung der beiden Sensorflächen 4, 6 verhindert ist.

Die zur Welle 13 hin zeigenden Außenflächen 18, 19 der Sensoreinrichtungen 3, 5 und die zur Welle 13 hin zeigende Außenfläche 20 des Abtastkopfes 1 sind leicht konvex ausgestaltet, so dass eine Anbringung an verschieden großen Wellen möglich ist. Durch die konvexe Ausgestaltung ist es zusätzlich möglich, die Sensorflächen 4, 6 so anzuordnen, dass sie miteinander fluchten, wodurch nicht nur die Rotationsbewegung einer Welle, sondern auch eine lineare Bewegung einer ebenen Fläche erfasst werden kann. Sogar die Anbringung im Inneren einer großen Hohlwelle ist durch diese Ausgestaltung möglich.

Zur Befestigung und zur Justierung des Abtastkopfes 1 verfügt dieser über zwei Langlöcher 21, in die Befestigungselemente, beispielsweise Schrauben, einführbar sind.

In Fig. 3 ist ein erfindungsgemäßer Abtastkopf 1 in einer perspektivischen Ansicht gezeigt. Die beiden Sensorflächen 4, 6 der ersten beziehungsweise zweiten Sensoreinrichtung 3, 5 liegen auf der gleichen, entlang einer Axialrichtung A der Welle 13 gemessenen Höhe. Beide Sensorflächen 4, 6 erfassen die gleiche, in dem Spannband 14 angeordnete Maßverkörperung 16. In diesem Fall handelt es sich um eine magnetische Maßverkörperung 16. Die Sensoreinrichtungen 3, 5 sind also kontaktlos messende, in diesem Fall magnetisch messende Sensoreinrichtungen 3, 5. Die Messung erfolgt praktisch verschleißfrei.

Alternativ könnten die beiden Sensorflächen 4, 6 auch entlang der Axialrichtung A der Welle 13 versetzt angeordnet sein und verschiedene Maßverkörperungen erfassen. Beispielsweise könnte die erste Sensorfläche 4 eine Grobeinteilung erfassen, während die zweite Sensorfläche 6 eine Feineinteilung erfasst.

Bei manchen Messmethoden kann es notwendig sein, dass zwischen der ersten Sensorfläche 4 und der zweiten Sensorfläche 6 ein bestimmter Abstand entlang der Umfangsrichtung U besteht. In einer vorteilhaften Ausgestaltung lässt sich daher der Abstand der beiden Sensorflächen 4, 6 verstellen, beispielsweise indem die Sensoreinheiten in unterschiedlichem Abstand voneinander anordenbar, anbringbar oder befestigbar ausgestaltet sind.

Die in den Fig. 1 bis 3 gezeigten Sensoreinrichtungen 3, 5 sind unabhängig voneinander schwenkbar. Dadurch ist es möglich, dass der Abtastkopf 1 relativ zur Welle 13 in einem vergleichsweise breiten Bereich anordenbar ist. In der Fig. 2 könnte der Abtastkopf 1 auch weiter links oder weiter rechts angeordnet sein. Um diesen Versatz auszugleichen, müsste eine der beiden Sensoreinrichtungen 3 oder 5 und damit die eine Sensorfläche 4 oder 6 weiter nach innen und die andere Sensoreinheit 5 bzw. 3 mit der anderen Sensorfläche 6 bzw. 4 weiter nach außen verschwenkt werden.

Alternativ könnten die beiden Sensoreinrichtungen 3, 5 und damit die beiden Sensorflächen 4, 6 schwenkbar miteinander gekoppelt sein, beispielsweise über ein Getriebe (nicht gezeigt) oder über Einzelantriebe. Eine solche Ausgestaltung würde die Anpassung an den Wellendurchmesser vereinfachen, da nur eine Sensoreinrichtung 3 oder 5 justiert werden müsste und die andere Sensoreinrichtung 5 bzw. 3 automatisch richtig mitjustiert werden würde. Allerdings wäre es dazu notwendig, dass die Relativposition zwischen dem Abtastkopf 1 und der Welle 13 vergleichsweise genau festgelegt ist.

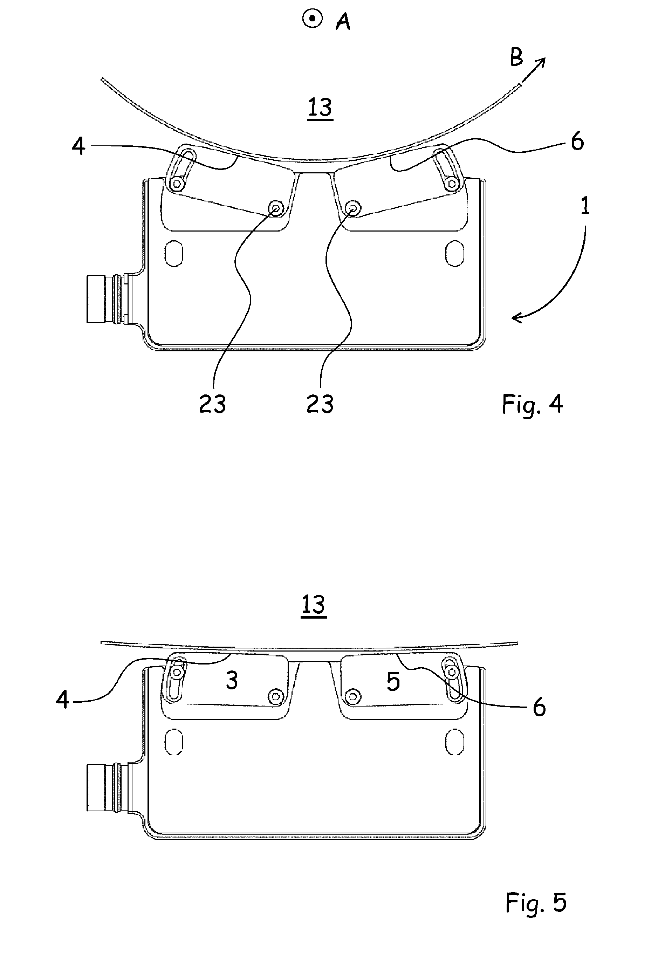

In den Fig. 4 bis 10 sind verschiedene Messmöglichkeiten erfindungsgemäßer Abtastköpfe 1 dargestellt.

In Fig. 4 wird am Außenumfang einer Welle 13 gemessen. Dadurch, dass sich die beiden Sensorflächen 4, 6 in verschiedenen Winkelstellungen anordnen lassen, sind Messungen an verschieden großen Wellen 13 möglich.

Die Messung in Fig. 4 erfolgt tangential. Die beiden Sensorflächen 4, 6 erstrecken sich in einer Richtung, die tangential zur Bewegungsrichtung B der Rotation eines Punktes auf der Außenfläche der Welle 13 verläuft. Zusätzlich erstrecken sich die Sensorflächen 4, 6 in einer Richtung, die parallel zur Axialrichtung A der Welle 13 verläuft. Die beiden Sensorflächen 4, 6 sind dabei jeweils um ein Gelenk 23 schwenkbar. Diese Gelenke 23 erlauben eine Schwenkbewegung um die Axialrichtung A der Welle 13. In den verschiedenen Winkelstellungen weisen die Sensorflächen verschieden große Zwischenwinkel auf. Bei Messung an einer Welle fluchten die beiden Sensorflächen also nicht. In Fig. 4 ist eine Messung an einer Welle mit einem vergleichsweise kleinen Durchmesser zu sehen.

In Fig. 5 ist eine Messung an einer Welle 13, deren Durchmesser im Vergleich zu der Welle in Fig. 4 groß ist, zu sehen. Die Sensorflächen 4 bzw. 6 der Sensoreinrichtungen 3 bzw. 5 weisen eine andere Winkelstellung als in Fig. 4 auf.

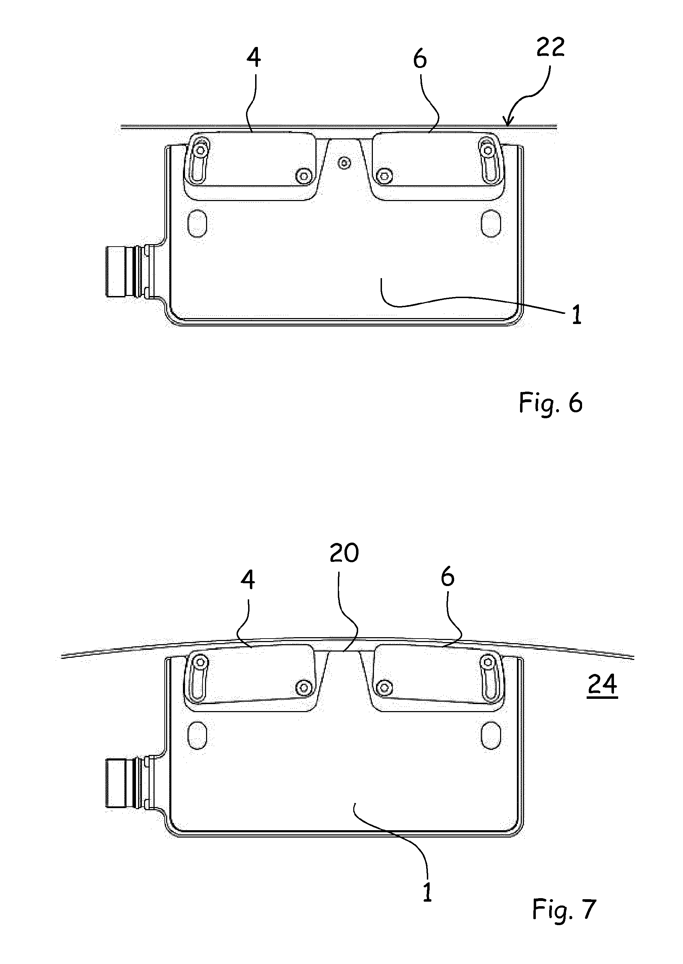

In Fig. 6 ist der Abtastkopf 1 in einer Winkelstellung gezeigt, in der die beiden Sensorflächen 4, 6 miteinander fluchten. Dadurch ist es möglich, die Bewegung einer ebenen Fläche 22, die beispielsweise zu einem linear bewegbaren Bauelement gehören kann, zu messen.

In Fig. 7 ist gezeigt, wie der Abtastkopf 1 zur Messung einer Rotation einer Hohlwelle 24 an einer Innenseite der Hohlwelle 24 benutzt wird. Durch die konvexe Ausgestaltung der Außenfläche 20 des Abtastkopfes 1 ist es möglich, auch an einer Innenfläche der Hohlwelle 24 zu messen. Dazu werden die Sensorflächen 4, 6 zum Rest des Abtastkopfes 1 hin verschwenkt. Bei der in Fig. 7 dargestellten Messung handelt es sich, wie bei der Messung in den Fig. 4, um eine tangentiale Messung.

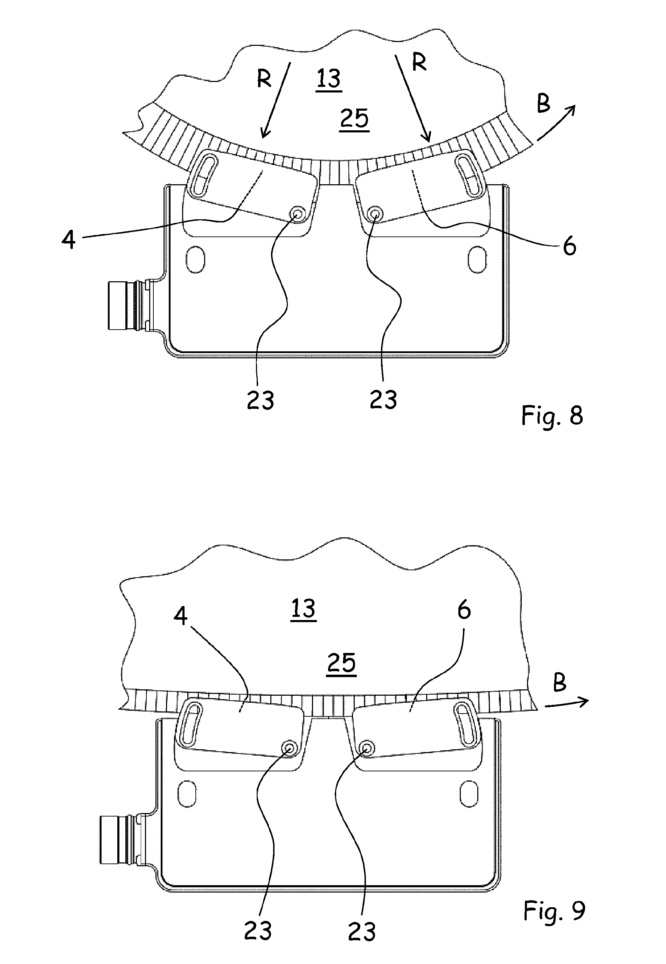

In Fig. 8 ist eine axiale Messung dargestellt. Bei dieser axialen Messung wird nicht an einer Außen- oder Innenfläche einer Welle 13, sondern an einer Stirnfläche 25 der Welle 13 gemessen. Die beiden Sensorflächen 4, 6 tasten eine Maßverkörperung 16 beispielsweise in Form einer Codespur, die auf der Stirnfläche 25 angeordnet ist, ab. Die beiden Sensorflächen 4, 6 zeigen zu der Stirnfläche 25 hin. Sie erstrecken sich entlang einer Radialrichtung R der Welle 13 und in einer Richtung, die tangential zur Bewegungsrichtung B der Rotation eines Punktes auf der Stirnfläche der Welle 13 verläuft. Sie liegen also parallel zu der Stirnfläche 25.

In Fig. 9 ist ebenfalls eine axiale Messung dargestellt. Die Winkelstellungen der verdeckten Sensorflächen 4, 6 unterscheiden sich in Fig. 8 und Fig. 9 in der Richtung tangential zur Bewegungsrichtung B. In beiden Winkelstellungen liegen die Sensorflächen 4, 6 in einer Ebene. Sie werden durch die Gelenke 23 um eine Axialrichtung A der Welle 13 verschwenkt.

In den Fig. 8 und 9 weist der Abtastkopf 1 keine Fixiereinrichtung auf, mit der die Winkelstellung fixiert werden kann. Die beiden Sensoreinrichtungen könnten aber beispielsweise über eine Halteeinrichtung gehalten werden. So könnte etwa ein plastisch verformbares Element wie ein Blech zwischen den beiden Sensoreinrichtungen angeordnet sein, um die beiden Sensorelemente zu halten. Alternativ könnte beispielsweise die Winkelstellung durch Vergießen mit einem aushärtbaren Harz oder durch einen Kleber fixiert werden.

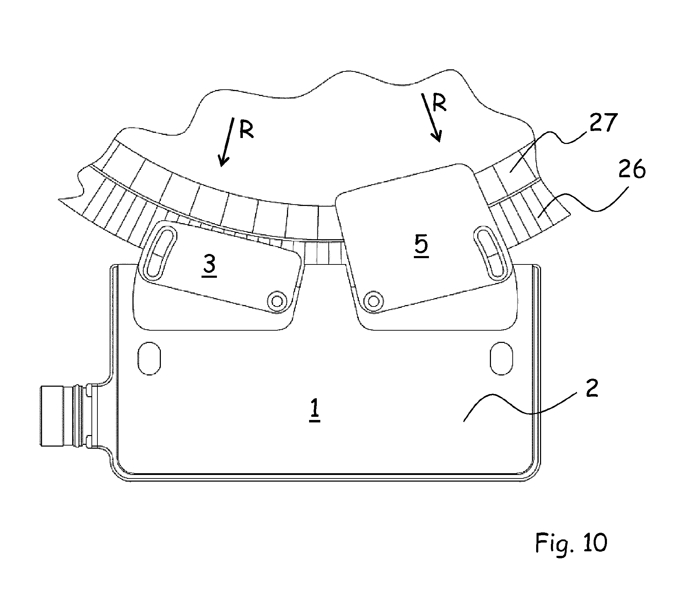

In Fig. 10 ist eine weitere vorteilhafte Ausgestaltung eines Abtastkopfes 1 dargestellt. Die erste Sensoreinrichtung 3 tastet eine fein aufgelöste Maßverkörperung ab. Die zweite Sensoreinrichtung 5 tastet die fein aufgelöste Maßverkörperung 26 und eine grob aufgelöste Maßverkörperung 27 ab. Dazu ist sie in der Radialrichtung R gemessen breiter als die erste Sensoreinrichtung 3. Sie kann eine breite oder zwei schmalere Sensorflächen aufweisen.

Zusätzlich zu den in den Figuren gezeigten zwei Sensoreinrichtungen 3, 5 können noch weitere Sensoreinrichtungen vorhanden sein. Beispielsweise kann eine dritte Sensoreinrichtung vorhanden sein, die relativ zum Rest des Abtastkopfes unbeweglich ist. Diese könnte sich beispielsweise zwischen den beiden Sensorflächen 4, 6 befinden.

## Patentansprüche

1. Abtastkopf (1) für einen Geber zur Erfassung von Rotations- oder Linearparametern, wie z.B. Position, Geschwindigkeit und Beschleunigung, eines drehbaren oder linear bewegbaren Bauelementes, insbesondere einer Welle (13), umfassend ein Gehäuse (2), eine erste, am Gehäuse (2) angeordnete Sensoreinrichtung (3) mit einer ersten Sensorfläche (4), und eine zweite, am Gehäuse (2) angeordnete, in einer Umfangsrichtung (U) des drehbaren Bauelementes zur ersten Sensoreinrichtung (3) versetzt angeordnete Sensoreinrichtung (5) mit einer zweiten Sensorfläche (6), **dadurch gekennzeichnet, dass** die erste und die zweite Sensoreinrichtung (3, 5) in mindestens zwei unterschiedlichen Winkelstellungen der Sensorflächen (4, 6) zueinander am Gehäuse (2) anordenbar sind.

2. Abtastkopf (1) nach Anspruch 1, **dadurch gekennzeichnet, dass** die erste und die zweite Sensoreinrichtung (3, 5) in den mindestens zwei unterschiedlichen Winkelstellungen der Sensorflächen (4, 6) zueinander am Gehäuse (2) anbringbar sind.

3. Abtastkopf (1) nach einem der Ansprüche 1 oder 2, **dadurch gekennzeichnet, dass** der Abtastkopf (1) eine Halteeinrichtung aufweist, die die erste und/oder die zweite Sensoreinrichtung (3, 5) in den mindestens zwei unterschiedlichen Winkelstellungen der Sensorflächen (4, 6) zueinander halten kann.

4. Abtastkopf (1) nach einem der Ansprüche 1 bis 3, **dadurch gekennzeichnet, dass** der Abtastkopf eine Fixiereinrichtung (9) aufweist, die eine Fixierung der ersten und/oder der Sensoreinrichtung (3, 5) in den mindestens zwei unterschiedlichen Winkelstellungen der Sensorflächen (4, 6) zueinander ermöglicht.

5. Abtastkopf (1) nach einem der Ansprüche 1 bis 4, **dadurch gekennzeichnet, dass** die erste und/oder die zweite Sensorfläche (4, 6) schwenkbar am Gehäuse (2) angeordnet ist.

6. Abtastkopf (1) nach einem der Ansprüche 1 bis 5, **dadurch gekennzeichnet, dass** die Sensorflächen (4, 6) unabhängig voneinander schwenkbar sind.

7. Abtastkopf (1) nach einem der Ansprüche 1 bis 5, **dadurch gekennzeichnet, dass** die erste und die zweite Sensorfläche (4, 6) schwenkbar miteinander gekoppelt sind.

8. Abtastkopf (1) nach einem der Ansprüche 1 bis 7, **dadurch gekennzeichnet, dass** Sensoreinrichtungen (3, 5) in unterschiedlichem Abstand voneinander anordenbar ausgestaltet sind.

9. Abtastkopf (1) nach einem der Ansprüche 1 bis 8, **dadurch gekennzeichnet, dass** die Halteeinrichtung (9) die Anordnung von erster und zweiter Sensorfläche (4, 6) in einer beliebigen Winkelstellung innerhalb eines kontinuierlichen Bereichs ermöglicht.

10. Abtastkopf (1) nach einem der Ansprüche 1 bis 9, **dadurch gekennzeichnet, dass** die Sensoreinrichtungen (3, 5) kontaktlos messende, insbesondere magnetisch oder induktiv messende Sensoreinrichtungen (3, 5) sind.

11. Abtastkopf (1) nach einem der Ansprüche 1 bis 10, **dadurch gekennzeichnet, dass** die Sensorflächen (4, 6) parallel zu einer Axialrichtung (A) des drehbaren Bauelementes oder parallel zu einer Radialrichtung (R) des drehbaren Bauelementes verlaufen.

12. Abtastkopf (1) nach einem der Ansprüche 1 bis 11, **dadurch gekennzeichnet, dass** eine dritte Sensoreinrichtung mit einer dritten Sensorfläche vorgesehen ist, wobei die dritte Sensorfläche nicht bewegbar am Gehäuse angeordnet ist.

13. Abtastkopf (1) nach einem der Ansprüche 1 bis 12, **dadurch gekennzeichnet, dass** die Sensorflächen (4, 6) in einer ersten Winkelstellung miteinander fluchten und in einer zweiten Winkelstellung nicht miteinander fluchten.
